# FASCICULE DE BREVET EUROPEEN

(11) **EP 3 049 281 B1**
(45) Date de publication et mention de la délivrance du brevet: **19.08.2020**
(21) Numéro de dépôt: 14777056.4
(22) Date de dépôt: 25.09.2014
(51) Int. Cl.: B60Q 1/14, B60J 3/04

(54) **DISPOSITIF ET PROCÉDÉ D'AIDE À LA CONDUITE**
VORRICHTUNG UND VERFAHREN ZUR FAHRUNTERSTÜTZUNG
DRIVING ASSISTANCE METHOD AND DEVICE

(30) Priorité: 26.09.2013 FR 1359266
(43) Date de publication de la demande: 03.08.2016
(73) Titulaire: Valeo Vision, 93012 Bobigny Cedex (FR)
(72) Inventeur: HUE, David, F-95430 Butry -sur-Oise (FR); EL IDRISSI, Hafid, F-93500 Pantin (FR); MONCHY, Etienne, F-95220 Herblay (FR)
(86) Numéro de dépôt international: PCT/EP2014/070514
(87) Numéro de publication internationale: WO 2015/044283

(56) Documents cités:
- EP-A1- 0 945 303
- DE-A1- 2 001 086
- DE-A1- 3 836 095
- US-A- 5 486 938

## Description

L'invention concerne un dispositif d'aide à la conduite d'un véhicule automobile selon le préambule de la revendication 1. Un tel dispositif est connu de DE 2001086 A. L'invention concerne également un procédé d'aide à la conduite d'un véhicule automobile.

La présente invention concerne les procédés et les dispositifs destinés à apporter une aide à la conduite des véhicules automobiles, particulièrement lorsque la luminosité extérieure est faible, et impose l'allumage des feux.

Les faisceaux lumineux émis par les dispositifs d'éclairage équipant les véhicules sont régis par des réglementations internationales, qui fixent des intensités maximales et minimales à respecter, par exemple sur un écran placé à distance et dans l'axe du dispositif d'éclairage. Ces réglementations ont pour finalité de simultanément :
- fournir au conducteur du véhicule équipé de ce dispositif d'éclairage un éclairage satisfaisant de la scène de route sur laquelle il circule, pour qu'il puisse appréhender son environnement dans les meilleures conditions possibles, et
- éviter d'éblouir les conducteurs d'autres véhicules, qu'ils circulent en sens inverse (véhicules croisés) ou qu'ils circulent dans le même sens (véhicules suivis).

Dans le but de répondre à ces finalités réglementaires et dans une optique d'améliorer le confort et la sécurité du conducteur, plusieurs solutions ont été proposées. L'une d'entre elle consiste à utiliser un dispositif d'aide à la conduite composé d'un éclairage pulsé synchronisé avec un écran à transmission variable, de façon à ce que l'éclairage atteigne sa valeur maximale quand le coefficient de transmission de l'écran atteint sa valeur maximale, c'est-à-dire une transparence maximale, et de façon à ce que l'éclairage atteigne sa valeur minimale quand le coefficient de transmission de l'écran à transmission variable atteint sa valeur minimale, c'est-à-dire une transparence minimale.

Ainsi, grâce à cette synchronisation, le conducteur profite pleinement de son éclairage, tout en réduisant les risques d'éblouissement par les sources de lumières extérieures, car la vision du conducteur est fortement amoindrie quand l'écran à transmission variable a sa transparence au minimum.

D'autre part, l'éclairage pulsé n'éblouit pas les autres véhicules puisqu'ils ne perçoivent qu'un éclairement moyen qui est prévu pour être conforme aux réglementations susmentionnées.

Des problèmes particuliers se posent lorsque le véhicule équipé du dispositif décrit précédemment croise un autre véhicule équipé d'un dispositif du même type. En particulier :
- Lorsque les deux véhicules sont en antiphase, c'est-à-dire que lorsque le véhicule a son écran à transmission variable qui a son coefficient de transmission au minimum pendant que l'autre véhicule a son éclairage allumé (phénomène d'antiphasage), le conducteur ne voit pas ou voit peu l'éclairage de l'autre véhicule.
- Lorsque les deux véhicules sont en phase, c'est-à-dire que leurs éclairages sont allumés au même moment et que leurs écrans à transmission variables ont leur coefficient de transmission au maximum au même moment (phénomène de phasage), conducteur peut être gêné par l'éclairage de l'autre véhicule.

L'invention vise à pallier au moins certains des inconvénients des dispositifs d'aide à la conduite connus.

Pour ce faire, l'invention concerne un dispositif d'aide à la conduite d'un véhicule automobile selon la revendication 1.

On entend par « modifier en permanence ledit signal puisé » que le signal pulsé est modifié suffisamment souvent, c'est-à-dire pas nécessairement 100% du temps, pour que si un phénomène d'antiphasage et/ou de phasage apparaît, le temps entre deux modifications soit assez court pour que le conducteur du véhicule ne perçoive pas visuellement ce phénomène. Du point de vue du conducteur, cela revient à dire que le phénomène n'a pas eu lieu.

On entend par « dispositif du même type » un dispositif d'aide à la conduite d'un véhicule automobile, le véhicule étant équipé d'au moins un dispositif d'éclairage apte à émettre un faisceau d'éclairage d'une scène de route en avant du véhicule, ledit dispositif d'aide comprenant un écran à transmission variable, destiné à être disposé entre la scène de route et un conducteur du véhicule, ledit dispositif d'aide étant configuré pour, en phase active, piloter un allumage d'au moins une source lumineuse du dispositif d'éclairage et un coefficient de transmission de l'écran à transmission variable en synchronisme par un signal pulsé qui pourra être le même que celui du premier véhicule.

Un dispositif selon l'invention permet donc d'empêcher les phénomènes d'antiphasage et de phasage en modifiant le signal pulsé qu'il y ait croisement d'un véhicule équipé d'un dispositif de même type ou non. Un dispositif selon l'invention permet aussi de réduire les phénomènes de scintillement dus à l'utilisation de signaux puisés.

Avantageusement et selon l'invention, le dispositif d'aide est configuré pour modifier le signal pulsé en lui appliquant un déphasage.

Selon un mode de réalisation de cet aspect de l'invention, la modification consiste seulement en un changement de phase et permet de travailler à fréquence fixe.

Avantageusement et selon l'invention, la valeur de déphasage est choisie de façon pseudo-aléatoire, par exemple à l'aide de tout générateur de valeurs pseudo-aléatoires connu de l'Homme du métier.

Selon cet aspect de l'invention, si l'on croise un véhicule équipé d'un dispositif du même type qui utilise aussi une modification de déphasage, on réduit les risques d'avoir encore des phénomènes d'antiphasage et de phasage qui subsisteraient si les deux véhicules utilisaient les mêmes paramètres de déphasage.

Avantageusement et selon l'invention, le signal pulsé est périodique de période T.

Avantageusement et selon l'invention, la moyenne du signal pulsé pendant la période T après modification dudit signal est la même que la moyenne du signal pulsé pendant cette même période T avant modification dudit signal.

Selon cet aspect de l'invention, toute modification effectuée au signal n'aura pas d'effet sur la valeur moyenne des grandeurs en cause. Notamment, la puissance moyenne de l'allumage sera constante quelle que soit la modification, ce qui permet de bénéficier de la même luminosité pour le conducteur et de rester conforme aux réglementations en termes d'éclairage.

Avantageusement et selon l'invention, le dispositif d'aide est configuré pour modifier le signal pulsé périodiquement selon une période P.

Avantageusement et selon l'invention la période P est égale à une période de synchronisation entre le dispositif d'éclairage et l'écran à transmission variable.

On entend par période de synchronisation entre le dispositif d'éclairage et l'écran à transmission variable la période entre deux synchronisations entre le dispositif d'éclairage et l'écran à transmission variable pour s'assurer que ledit dispositif d'éclairage et ledit écran à transmission variable soient pilotés en synchronisme par le signal pulsé.

Avantageusement et selon l'invention, la période P est égale à la période de synchronisation d'un protocole de communication sans-fil dudit signal.

Avantageusement et selon l'invention, le dispositif comprend une centrale de commande adaptée pour transmettre le signal pulsé au dispositif d'éclairage et/ou à l'écran à transmission variable.

Avantageusement et selon l'invention, la centrale de commande comprend un émetteur d'ondes de télécommandes apte à transmettre le signal pulsé à destination d'un récepteur dudit écran à transmission variable, ledit récepteur étant apte à commander le coefficient de transmission de l'écran à transmission variable.

Avantageusement et selon l'invention, l'émetteur d'onde de télécommande est configuré pour transmettre le signal pulsé selon le protocole de communication sans-fil.

Avantageusement et selon l'invention, le signal pulsé est variable selon un mode de Modulation de Largeur d'Impulsions (PWM).

Avantageusement et selon l'invention, l'écran à transmission variable est constitué :
- par le pare-brise du véhicule,
- par un écran disposé entre le pare-brise du véhicule et le conducteur du véhicule, ou
- par des lunettes portées par le conducteur du véhicule.

L'invention concerne également un procédé d'aide à la conduite d'un véhicule automobile selon la revendication 8.

Un procédé selon l'invention permet donc d'empêcher les phénomènes d'antiphasage et de phasage en modifiant le signal pulsé qu'il y ait croisement d'un véhicule mettant en œuvre le même type de procédé ou non..

Avantageusement et selon l'invention, ladite étape de modification comprend une étape de déphasage dudit signal pulsé.

Avantageusement et selon l'invention, la valeur de déphasage est choisie de façon pseudo-aléatoire.

Avantageusement et selon l'invention, le signal pulsé est périodique de période T.

Avantageusement et selon l'invention, la moyenne du signal pulsé pendant la période T après ladite étape de modification est la même que la moyenne du signal pulsé pendant cette même période T, avant ladite étape de modification.

Avantageusement et selon l'invention, ladite étape de modification intervient périodiquement selon une période P.

Avantageusement et selon l'invention la période P est égale à une période de synchronisation entre le dispositif d'éclairage et l'écran à transmission variable.

Avantageusement et selon l'invention, ladite période P est égale à une période de synchronisation d'un protocole de communication sans-fil dudit signal.

Avantageusement et selon l'invention, le procédé d'aide comprend une étape de transmission du signal pulsé au dispositif d'éclairage et à l'écran à transmission variable.

Avantageusement et selon l'invention, l'étape de transmission du signal pulsé se fait selon un protocole de communication sans-fil.

Avantageusement et selon l'invention, le signal pulsé est variable selon un mode de Modulation de Largeur d'Impulsions.

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en coupe partielle d'un véhicule comprenant un dispositif selon un mode de réalisation de l'invention,
- la figure 2 est une vue schématique du dispositif d'aide selon un mode de réalisation de l'invention,
- la figure 3 est un diagramme de l'évolution temporelle du signal pulsé avant et après modification du signal pulsé, selon l'invention,

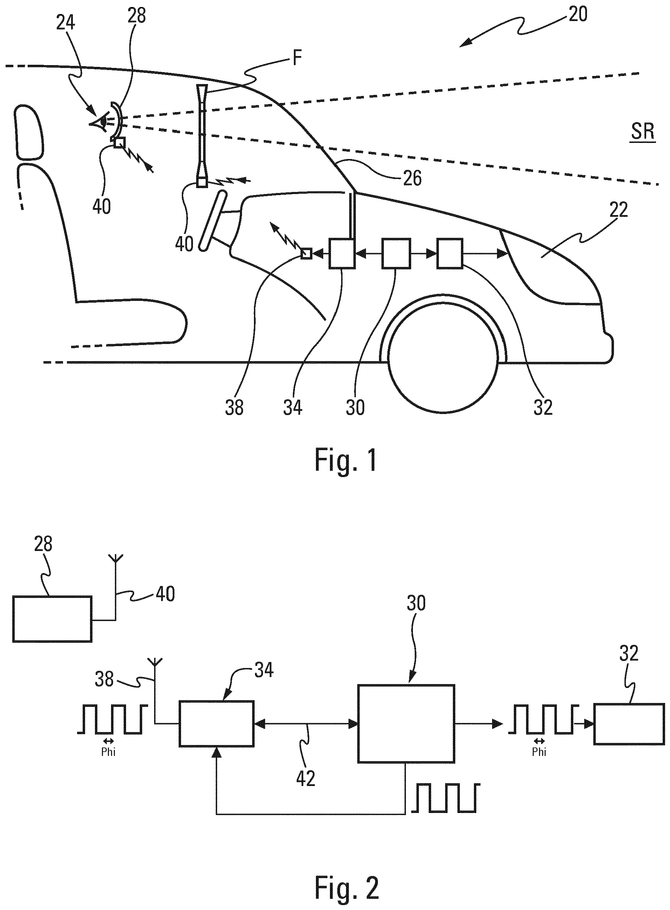

La figure 1 représente de façon schématique en coupe partielle un véhicule 20 comprenant un dispositif d'aide selon un mode de réalisation de l'invention. Le véhicule 20 est équipé de manière conventionnelle par un dispositif d'éclairage 22 apte à émettre un faisceau d'éclairage d'une scène de route SR grâce à une source lumineuse, et est piloté par un conducteur, symbolisé par son œil 24. La scène de route correspond à ce qu'observe le conducteur 24 du véhicule 20. Le conducteur 24 observe ici la scène de route devant le véhicule 20 et à travers le pare-brise 26.

Un écran à transmission variable est disposé dans le champ de vision du conducteur 24, entre ce dernier et la scène de route. Selon différents modes de réalisation de l'invention, l'écran à transmission variable peut être constitué :
- d'un écran F proprement dit, placé entre le conducteur 24 et le pare-brise 26, par exemple rabattable à la façon d'un pare-soleil,
- du pare-brise 26 lui-même, ou
- d'une paire de lunettes 28, portées par le conducteur 24, à l'instar de lunettes de soleil ou lunettes correctrices, un seul verre de lunette ayant été représenté sur la figure 1.

Ces trois modes de réalisation ont été représentés simultanément sur la figure 1, pour la commodité de l'exposé. Ce ne sont cependant que des variantes de réalisation, chacun d'entre eux tendant à obtenir le même résultat. Dans la suite de la description, le terme « écran à transmission variable » sera utilisé pour désigner indifféremment l'un de ces trois modes de réalisation.

Quel que soit le mode de réalisation, le dispositif d'aide, quand il est en phase active (c'est-à-dire en fonctionnement), pilote en synchronisme le coefficient de transmission de l'écran à transmission variable et la source lumineuse du dispositif d'éclairage 22 du véhicule 20. Cela a pour but que l'écran à transmission variable ait son coefficient de transmission au maximum (c'est-à-dire que la transparence de l'écran est au maximum) quand le dispositif d'éclairage 22 est allumé, et donc que le conducteur 24 voit la scène de route éclairée par son dispositif d'éclairage 22. Cela a aussi pour but que l'écran à transmission variable ait son coefficient de transmission au minimum (c'est-à-dire que la transparence de l'écran est au minimum) quand le dispositif d'éclairage 22 est éteint, et donc que les éclairages extérieurs de la scène de route soit atténués.

Pour ce faire, le dispositif comprend ici une centrale de commande 30 qui génère un signal pulsé destiné à commander le dispositif d'éclairage 22 et l'écran à transmission variable.

La centrale de commande 30 pourra être reliée à un circuit de gestion 32 qui commande l'alimentation du dispositif d'allumage de manière à ce que ledit dispositif émette un faisceau d'intensité variable entre une valeur maximale et une valeur minimale périodiquement variable selon le signal pulsé.

La centrale de commande 30 pourra aussi reliée à un circuit de commande du coefficient de transmission 34 pour la transmission du signal pulsé. Si l'écran à transmission variable est mobile ou éloigné de la centrale de commande 30 (dans le cas de l'utilisation des lunettes 28 par exemples), la transmission du signal pulsé peut s'effectuer par une liaison sans-fil, en utilisant un protocole de communication sans-fil déterminé, comme par exemple selon les normes IEEE 802.15.1 ainsi que toutes ses extensions (communément dénommé par la marque déposée Bluetooth) ou IEEE 802.11 (communément dénommé par la marque déposée Wi-Fi).

Si la transmission du signal pulsé de la centrale de commande 30 à l'écran à transmission variable est effectuée sans-fil, le circuit de commande du coefficient de transmission 34 comprend, par exemple, un émetteur d'ondes de télécommande 38, et l'écran à transmission variable est pourvu, par exemple, d'un récepteur 40 de ces mêmes ondes de télécommande. Le récepteur 40 commande alors le coefficient de transmission variable de l'écran, dans le sens où il applique à l'écran de transmission variable les ordres déterminés correspondant au signal pulsé.

La figure 2 est une vue schématique du dispositif d'aide selon un mode de réalisation de l'invention utilisant une transmission sans-fil.

La centrale de commande 30 comprend un microcontrôleur qui fournit un signal pulsé de fréquence fixe et de déphasage nul. Ce signal pulsé non modifié est transmis au circuit de commande du coefficient de transmission 34. Le microcontrôleur fournit en parallèle des paramètres de modification du signal pulsé conformément à l'invention, ici des paramètres de déphasage, notamment par le biais d'une connexion 42. Le circuit de commande du coefficient de transmission 34 inclut ces paramètres dans le signal pulsé et envoie par le biais de l'émetteur 38 le signal pulsé modifié au récepteur 40 de l'écran à transmission variable.

A l'inverse, le circuit de commande du coefficient de transmission 34 peut aussi transmettre des informations au microcontrôleur par le biais de la connexion 42.

Selon un autre mode de réalisation non représenté, le microcontrôleur envoie directement le signal pulsé modifié selon les paramètres de modification au circuit de commande du coefficient de transmission 34.

De la même façon, le microcontrôleur fournit au circuit de gestion 32 le signal pulsé, soit en fournissant le signal pulsé non-modifié et les paramètres de modification en parallèle, soit directement le signal pulsé modifié, comme représenté sur la figure 2.

Dans ce mode de réalisation, le procédé d'aide mis en œuvre par le dispositif d'aide contient donc les étapes suivantes :
- Une étape de création du signal pulsé par le microcontrôleur,
- Une étape de modification du signal pulsé, soit directement par le microcontrôleur, soit par le circuit de commande du coefficient de transmission 34 qui reçoit les paramètres de modification du microcontrôleur,
- Une étape de transmission du signal pulsé par l'émetteur d'ondes de télécommande 38 du circuit de commande du coefficient de transmission 34 vers le récepteur 40.

On pourra noter que transmettre le signal pulsé non modifié au circuit de commande du coefficient de transmission 34 depuis la centrale de commande 30 permet d'assurer des synchronisations entre la centrale de commande 30 et l'écran à transmission variable. Cela permet de s'assurer qu'il ne se crée pas de décalage entre le signal pulsé que reçoit l'écran à transmission variable et le signal pulsé que reçoit le dispositif d'éclairage 22.

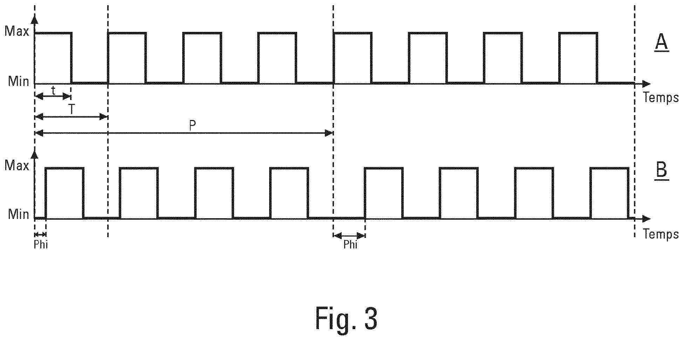

La figure 3 présente le diagramme d'un exemple d'évolution temporelle du signal pulsé avant modification A et après modification B, pendant la phase active du dispositif d'aide. Dans ce mode de réalisation, la modification consiste en un déphasage Phi. Le signal pulsé présenté ici est un signal périodique de période T, dont l'amplitude varie entre un minimum Min et un maximum Max. Le signal pulsé étant envoyé à la fois à l'écran de transmission variable et au dispositif d'éclairage 22, le minimum Min correspond à un coefficient de transmission au minimum pour l'écran à transmission variable et à une source lumineuse éteinte pour le dispositif d'allumage. De la même façon, le maximum Max correspond à un coefficient de transmission au maximum pour l'écran à transmission variable et à une source lumineuse allumée pour le dispositif d'allumage.

On peut caractériser le signal pulsé par un rapport cyclique qui est égale à t/T, t correspondant au temps où la valeur du signal pulsé est au maximum. Sur la figure 3, le rapport cyclique est de 0,5, soit, exprimé en pourcentage, 50%. En pratique, le signal pulsé étant utilisé pour piloter le coefficient de transmission de l'écran à transmission variable et l'allumage du dispositif d'éclairage 22, un rapport cyclique de 50% correspond à :
- un dispositif d'allumage allumé pendant la moitié d'une période et éteint pendant l'autre moitié : le résultat équivaut à un éclairage continu de puissance égale à la moitié de la puissance émise pendant la moitié de période où l'éclairage est allumé ;
- un écran à transmission variable qui a son coefficient de transmission au maximum pendant une moitié de période (de façon simultanée avec la moitié de période où le dispositif d'éclairage 22 est allumé) et au minimum pendant une moitié de période (de façon simultanée avec la moitié de période où le dispositif d'éclairage 22 est éteint) : le résultat équivaut à un coefficient de transmission moyen égal à la moyenne entre le coefficient de transmission maximum et le coefficient de transmission minimal.

Pour que le système fonctionne de façon avantageuse, il faut que la modification n'entraîne pas de différence de moyenne du signal pulsé sur une période T entre le signal pulsé avant modification A et le signal pulsé après modification B, car cela signifierai une modification de la puissance du dispositif d'éclairage 22 qui pourrait ne plus correspondre aux réglementations. Dans le mode de réalisation présenté, on constate que le déphasage Phi ne modifie pas le rapport cyclique ni l'amplitude du signal et donc ne modifie pas la moyenne du signal pendant une période T.

Le fait que ladite modification du signal pulsé ait lieu en permanence permet d'éviter que deux véhicules qui se croisent utilisent le même signal pulsé modifié en même temps, le tout en évitant de devoir procéder à une communication entre véhicules ou à une prise d'informations extérieures. Ainsi, dans le mode de réalisation de la figure 3, le déphasage Phi change selon une période P = 4T. La période P doit être faible pour intervenir un nombre de fois suffisant lors du croisement d'un véhicule. Par exemple, le changement de phase peut s'effectuer à chaque période T (soit P = T), ou bien correspondre à la période de synchronisation de l'émetteur d'ondes de télécommande 38 et du récepteur 40, à la période de synchronisation des protocoles de communication sans-fil ou tout autre valeur, notamment intermédiaire. Cette période de synchronisation pourra correspondre à des durées de 5T à 10T.

La valeur du déphasage Phi pour chaque période P peut être choisie de façon pseudo-aléatoire pour diminuer les risques de croiser un véhicule dont le signal pulsé est modifié par le même déphasage. La valeur peut aussi dépendre d'un paramètre du véhicule qui sera à priori unique lors d'un croisement, comme la vitesse ou le régime moteur. La valeur peut aussi dépendre d'une fonction mathématique, par exemple linéaire ou triangulaire. La valeur choisie est avantageusement positive et comprise entre 0 et (1-(t/T))^{∗}T, cette dernière valeur correspondant au temps pendant lequel le signal pulsé a sa valeur minimale durant une période T.

Avantageusement, le dispositif selon l'invention met en œuvre le procédé selon l'invention.

Avantageusement, le procédé selon l'invention est mis en œuvre par le dispositif selon l'invention.

Avantageusement, l'étape de transmission du signal pulsé est mise en œuvre par l'émetteur d'ondes de télécommande du dispositif d'aide selon l'invention.

Avantageusement, l'émetteur d'ondes de télécommandes du dispositif d'aide selon l'invention met en œuvre l'étape de transmission du signal pulsé du procédé d'aide selon l'invention.

## Revendications

1. Dispositif d'aide à la conduite d'un véhicule automobile (20), le véhicule (20) étant équipé d'au moins un dispositif d'éclairage (22) apte à émettre un faisceau d'éclairage d'une scène de route (SR) en avant du véhicule (20), ledit dispositif d'aide comprenant un écran à transmission variable (26 ; 28 ; F), destiné à être disposé entre la scène de route (SR) et un conducteur (24) du véhicule, ledit dispositif d'aide étant configuré pour, en phase active, piloter un allumage d'au moins une source lumineuse du dispositif d'éclairage (22) et un coefficient de transmission de l'écran à transmission variable (26 ; 28 ; F) en synchronisme par un signal pulsé, **caractérisé en ce que** ledit dispositif d'aide est configuré pour modifier en permanence ledit signal pulsé, tant que le dispositif est en phase active, de sorte à éviter des phénomènes d'antiphasage, c'est à dire que le véhicule a son écran à transmission variable avec son coefficient de transmission au minimum pendant que un autre véhicule équipé d'un dispositif du même type a son éclairage allumé, et/ou de phasage, c'est à dire que le éclairage du véhicule et le éclairage de l'autre véhicule sont allumés au même moment et que leurs écrans à transmission variable ont leur coefficient de transmission au maximum au même moment, au cours d'un éventuel croisement dudit autre véhicule.

2. Dispositif d'aide selon la revendication 1, **caractérisé en ce qu'**il est configuré pour modifier le signal pulsé en lui appliquant un déphasage.

3. Dispositif d'aide selon la revendication 2, **caractérisé en ce que** la valeur de déphasage (Phi) est choisie de façon pseudo-aléatoire.

4. Dispositif d'aide selon l'une des revendications précédentes, **caractérisé en ce que** le signal pulsé est périodique de période T.

5. Dispositif d'aide selon la revendication 4, **caractérisé en ce que** la moyenne du signal pulsé pendant la période T après modification dudit signal est la même que la moyenne du signal pulsé pendant cette même période T avant modification dudit signal.

6. Dispositif d'aide selon l'une des revendications précédentes, **caractérisé en ce qu'**il est configuré pour modifier le signal pulsé périodiquement selon une période P.

7. Dispositif d'aide selon la revendication 6, **caractérisé en ce que** la période P est égale à une période de synchronisation entre le dispositif d'éclairage (22) et l'écran à transmission variable (26 ; 28 ; F).

8. Procédé d'aide à la conduite d'un véhicule automobile (20), le véhicule (20) étant équipé d'au moins un dispositif d'éclairage (22) apte à émettre un faisceau d'éclairage d'une scène de route (SR) en avant du véhicule, et d'un écran à transmission variable (26 ; 28 ; F), destiné à être disposé entre la scène de route (SR) et un conducteur (24) du véhicule, ledit procédé comprenant une étape de pilotage synchronisé d'un allumage d'au moins une source lumineuse du dispositif d'éclairage (22) et d'un coefficient de transmission de l'écran à transmission variable (26 ; 28 ; F), par un signal pulsé, **caractérisé en ce que** le procédé contient une étape de modification en permanence dudit signal pulsé de sorte à éviter des phénomènes d'antiphasage, c'est à dire que le véhicule a son écran à transmission variable avec son coefficient de transmission au minimum pendant que un autre véhicule équipé d'un dispositif du même type a son éclairage allumé, et/ou de phasage, c'est à dire que le éclairage du véhicule et le éclairage de l'autre véhicule sont allumés au même moment et que leurs écrans à transmission variable ont leur coefficient de transmission au maximum au même moment, au cours d'un éventuel croisement dudit autre véhicule.

9. Procédé d'aide selon la revendication 8, **caractérisé en ce que** ladite étape de modification comprend une étape de déphasage dudit signal pulsé.

10. Procédé d'aide selon la revendication 9, **caractérisé en ce que** la valeur de déphasage (Phi) est choisie de façon pseudo-aléatoire.

11. Procédé d'aide selon l'une des revendications 8 à 10, **caractérisé en ce que** le signal pulsé est périodique de période T.

12. Procédé d'aide selon la revendication 11, **caractérisé en ce que** la moyenne du signal pulsé pendant la période T après ladite étape de modification est la même que la moyenne du signal pulsé pendant cette même période T avant ladite étape de modification.

13. Procédé d'aide selon l'une des revendications 8 à 12, **caractérisé en ce que** ladite étape de modification intervient périodiquement selon une période P.

14. Procédé d'aide selon la revendication 13, **caractérisé en ce que** ladite période P est égale à une période de synchronisation dudit signal entre le dispositif d'éclairage (22) et l'écran à transmission variable (26 ; 28 ; F).

## Patentansprüche

1. Vorrichtung zur Unterstützung des Fahrens eines Kraftfahrzeugs (20), wobei das Fahrzeug (20) mit mindestens einer Beleuchtungsvorrichtung (22) ausgerüstet ist, die fähig ist, einen Strahl zum Beleuchten einer Straßenszene (SR) vor dem Fahrzeug (20) auszusenden, wobei die Unterstützungsvorrichtung einen Schirm mit variabler Durchlässigkeit (26; 28; F) beinhaltet, der dazu bestimmt ist, zwischen der Straßenszene (SR) und einem Fahrer (24) des Fahrzeugs angeordnet zu sein, wobei die Unterstützungsvorrichtung dazu konfiguriert ist, in aktiver Phase ein Einschalten mindestens einer Lichtquelle der Beleuchtungsvorrichtung (22) und einen Durchlässigkeitskoeffizienten des Schirms mit variabler Durchlässigkeit (26; 28; F) synchron durch ein gepulstes Signal zu steuern, **dadurch gekennzeichnet, dass** die Unterstützungsvorrichtung dazu konfiguriert ist, das gepulste Signal permanent zu modifizieren, während sich die Vorrichtung in der aktiven Phase befindet, um bei einem möglichen Vorbeifahren eines anderen Fahrzeugs Phänomene einer Gegenphasenlage zu vermeiden, das heißt, dass bei dem Fahrzeug der Durchlässigkeitskoeffizient des Schirms mit variabler Durchlässigkeit auf Minimum eingestellt ist, während bei dem anderen Fahrzeug, das mit einer Vorrichtung des gleichen Typs ausgerüstet ist, die Beleuchtung eingeschaltet ist, und/oder Phänomene einer gleichen Phasenlage zu vermeiden, das heißt, dass die Beleuchtung des Fahrzeugs und die Beleuchtung des anderen Fahrzeugs zur selben Zeit eingeschaltet sind und dass bei ihren Schirmen mit variabler Durchlässigkeit der Durchlässigkeitskoeffizient zur selben Zeit auf Maximum eingestellt ist.

2. Unterstützungsvorrichtung nach Anspruch 1, **dadurch gekennzeichnet, dass** sie dazu konfiguriert ist, das gepulste Signal zu modifizieren, indem sie eine Phasenverschiebung auf dieses anwendet.

3. Unterstützungsvorrichtung nach Anspruch 2, **dadurch gekennzeichnet, dass** der Wert der Phasenverschiebung (Phi) pseudozufällig ausgewählt wird.

4. Unterstützungsvorrichtung nach einem der vorhergehenden Ansprüche, **dadurch gekennzeichnet, dass** das gepulste Signal periodisch mit der Periode T ist.

5. Unterstützungsvorrichtung nach Anspruch 4, **dadurch gekennzeichnet, dass** der Mittelwert des gepulsten Signals während der Periode T nach der Modifizierung des Signals derselbe ist wie der Mittelwert des gepulsten Signals während dieser gleichen Periode T vor der Modifizierung des Signals.

6. Unterstützungsvorrichtung nach einem der vorhergehenden Ansprüche, **dadurch gekennzeichnet, dass** sie dazu konfiguriert ist, das gepulste Signal periodisch gemäß einer Periode P zu modifizieren.

7. Unterstützungsvorrichtung nach Anspruch 6, **dadurch gekennzeichnet, dass** die Periode P gleich einer Synchronisationsperiode zwischen der Beleuchtungsvorrichtung (22) und dem Schirm mit variabler Durchlässigkeit (26; 28; F) ist.

8. Verfahren zur Unterstützung des Fahrens eines Kraftfahrzeugs (20), wobei das Fahrzeug (20) mit mindestens einer Beleuchtungsvorrichtung (22), die fähig ist, einen Strahl zum Beleuchten einer Straßenszene (SR) vor dem Fahrzeug auszusenden, und einem Schirm mit variabler Durchlässigkeit (26; 28; F), der dazu bestimmt ist, zwischen der Straßenszene (SR) und einem Fahrer (24) des Fahrzeugs angeordnet zu sein, ausgerüstet ist, wobei das Verfahren einen Schritt des synchronisierten Steuerns eines Einschaltens mindestens einer Lichtquelle der Beleuchtungsvorrichtung (22) und eines Durchlässigkeitskoeffizienten des Schirms mit variabler Durchlässigkeit (26; 28; F) durch ein gepulstes Signal beinhaltet, **dadurch gekennzeichnet, dass** das Verfahren einen Schritt des permanenten Modifizierens des gepulsten Signals enthält, um bei einem möglichen Vorbeifahren eines anderen Fahrzeugs Phänomene einer Gegenphasenlage zu vermeiden, das heißt, dass bei dem Fahrzeug der Durchlässigkeitskoeffizient des Schirms mit variabler Durchlässigkeit auf Minimum eingestellt ist, während bei dem anderen Fahrzeug, das mit einer Vorrichtung des gleichen Typs ausgerüstet ist, die Beleuchtung eingeschaltet ist, und/oder Phänomene einer gleichen Phasenlage zu vermeiden, das heißt, dass die Beleuchtung des Fahrzeugs und die Beleuchtung des anderen Fahrzeugs zur selben Zeit eingeschaltet sind und dass bei ihren Schirmen mit variabler Durchlässigkeit der Durchlässigkeitskoeffizient zur selben Zeit auf Maximum eingestellt ist.

9. Unterstützungsverfahren nach Anspruch 8, **dadurch gekennzeichnet, dass** der Schritt des Modifizierens einen Schritt der Phasenverschiebung des gepulsten Signals beinhaltet.

10. Unterstützungsverfahren nach Anspruch 9, **dadurch gekennzeichnet, dass** der Wert der Phasenverschiebung (Phi) pseudozufällig ausgewählt wird.

11. Unterstützungsverfahren nach einem der Ansprüche 8 bis 10, **dadurch gekennzeichnet, dass** das gepulste Signal periodisch mit der Periode T ist.

12. Unterstützungsverfahren nach Anspruch 11, **dadurch gekennzeichnet, dass** der Mittelwert des gepulsten Signals während der Periode T nach dem Schritt des Modifizierens derselbe ist wie der Mittelwert des gepulsten Signals während dieser gleichen Periode T vor dem Schritt des Modifizierens.

13. Unterstützungsverfahren nach einem der Ansprüche 8 bis 12, **dadurch gekennzeichnet, dass** der Schritt des Modifizierens periodisch gemäß einer Periode P stattfindet.

14. Unterstützungsverfahren nach Anspruch 13, **dadurch gekennzeichnet, dass** die Periode P gleich einer Synchronisationsperiode des Signals zwischen der Beleuchtungsvorrichtung (22) und dem Schirm mit variabler Durchlässigkeit (26; 28; F) ist.

## Claims

1. Motor vehicle (20) driving assistance device, the vehicle (20) being equipped with at least one lighting device (22) capable of emitting a beam illuminating a road scene (SR) in front of the vehicle (20), said assistance device comprising a variable transmission screen (26; 28; F), intended to be disposed between the road scene (SR) and a driver (24) of the vehicle, said assistance device being configured to, in active phase, control a switching on of at least one light source of the lighting device (22) and a coefficient of transmission of the variable transmission screen (26; 28; F) synchronized by a pulsed signal, **characterized in that** said assistance device is configured to permanently modify said pulsed signal, as long as the device is in active phase, so as to avoid phenomena of antiphasing, that is to say that the vehicle with its variable transmission screen with its transmission coefficient at the minimum while another vehicle equipped with a device of the same type has its lighting switched on, and/or of phasing, that is to say that the lighting of the vehicle and the lighting of the other vehicle are switched on at the same moment and their variable transmission screens have their transmission coefficient at the maximum at the same moment,
during a possible passing of said other vehicle.

2. Assistance device according to Claim 1, **characterized in that** it is configured to modify the pulsed signal by applying a phase shift to it.

3. Assistance device according to Claim 2, **characterized in that** the phase-shift value (Phi) is chosen pseudo-randomly.

4. Assistance device according to one of the preceding claims, **characterized in that** the pulsed signal is periodic of period T.

5. Assistance device according to Claim 4, **characterized in that** the average of the pulsed signal during the period T after modification of said signal is the same as the average of the pulsed signal during this same period T before modification of said signal.

6. Assistance device according to one of the preceding claims, **characterized in that** it is configured to modify the pulsed signal periodically according to a period P.

7. Assistance device according to Claim 6, **characterized in that** the period P is equal to a period of synchronization between the lighting device (22) and the variable transmission screen (26; 28; F).

8. Motor vehicle (20) driving assistance method, the vehicle (20) being equipped with at least one lighting device (22) being able to emit a beam lighting a road scene (SR) in front of the vehicle, and a variable transmission screen (26; 28; F), intended to be disposed between the road scene (SR) and a driver (24) of the vehicle, said method comprising a step of synchronized control of a switching on of at least one light source of the lighting device (22) and a coefficient of transmission of the variable transmission screen (26; 28; F), by a pulsed signal, **characterized in that** the method contains a step of permanently modifying said pulsed signal so as to avoid phenomena of antiphasing, that is to say that the vehicle with its variable transmission screen with its transmission coefficient at the minimum while another vehicle equipped with a device of the same type has its lighting switched on, and/or of phasing, that is to say that the lighting of the vehicle and the lighting of the other vehicle are switched on at the same moment and their variable transmission screens have their transmission coefficient at the maximum at the same moment,
during a possible passing of said other vehicle.

9. Assistance method according to Claim 8, **characterized in that** said modification step comprises a step of phase-shifting of said pulsed signal.

10. Assistance method according to Claim 9, **characterized in that** the phase-shift value (Phi) is chosen pseudo-randomly.

11. Assistance method according to one of Claims 8 to 10, **characterized in that** the pulsed signal is periodic of period T.

12. Assistance method according to Claim 11, **characterized in that** the average of the pulsed signal during the period T after said modification step is the same as the average of the pulsed signal during this same period T before said modification step.

13. Assistance method according to one of Claims 8 to 12, **characterized in that** said modification step occurs periodically according to a period P.

14. Assistance method according to Claim 13, **characterized in that** said period P is equal to a period of synchronization of said signal between the lighting device (22) and the variable transmission screen (26; 28; F) .
